# EUROPÄISCHE PATENTSCHRIFT

(11) **EP 0 542 231 B1**
(45) Veröffentlichungstag und Bekanntmachung des Hinweises auf die Patenterteilung: **16.07.2003**
(21) Anmeldenummer: 92119292.8
(22) Anmeldetag: 11.11.1992
(51) Int. Cl.: G06K 7/06, H01H 11/00

(54) **Chipkartenlesegerät mit einem Endlagenschalter**
Chip card reading device comprising an end position switch
Dispositif de lecture de cartes à puces pourvu d'un interrupteur de fin de course

(30) Priorität: 12.11.1991 DE 4137209; 10.04.1992 DE 4212150; 21.02.1992 DE 4205359
(43) Veröffentlichungstag der Anmeldung: 19.05.1993
(73) Patentinhaber: AMPHENOL-TUCHEL ELECTRONICS GmbH, D-74064 Heilbronn (DE)
(72) Erfinder: Reichardt, Manfred, W-7102 Weinberg (DE); Bleier, Robert, W-7101 Untergruppenbach (DE)
(74) Vertreter: Wagner, Karl H., Dipl.-Ing.

(56) Entgegenhaltungen:
- EP-A- 0 366 513
- US-A- 3 161 751
- US-A- 4 900 273

## Beschreibung

Die Erfindung bezieht sich auf einen Chipkartenleser mit einem Endlagenschalter. Ganz allgemein bezieht sich die Erfindung auf einen Chipkartenleser, in den eine Chipkarte oder auch ein sogenannter Schlüssel, der einen Chip und Kontakte ähnlich einer Chipkarte besitzt, in eine Leseposition eingesetzt werden kann. In der Leseposition kommen im Chipkartenleser vorhandene Kontaktelemente (Lesekontakte) in Kontakt mit den Kontaktzonen auf der Chipkarte (oder dem Schlüssel).

Bei bekannten Chipkartenlesern wird häufig während des Einsetzens der Chipkarte in die Leseposition eine Absenkbewegung zwischen Karte und Chipkartenleser vorgesehen, um so eine gute Kontaktierung zwischen den Lesekontakten des Chipkartenlesers und den Kontaktzonen der Chipkarte zu erreichen. Solche Leser machen eine die Absenkbewegung vorsehende Mechanik erforderlich. Für andere Anwendungsfälle kann auch ein Chipkartenleser ausreichend sein, der auf eine solche Absenkbewegung verzichtet und gleitende Lesekontakte verwendet, so daß die Absenkmechanik entfallen kann. Beispiele für derartige Chipkartenleser sind folgenden Druckschriften zu entnehmen: EP 0 366 513 A1, US-A 4 900 273 und DE-A 39 31 506.

Insbesondere zeigt die EP 0 366 513 A1 einen Chipkartenleser mit einem Rahmen, in dem neben Lesekontakten ein Endlagenschalter 4 verwendet wird, der zwei elastisch verformbare Kontaktfedern aufweist. Eine der Kontaktfedern ist eine sogenannte Detektierfeder, die elektrisch mit der anderen Feder, die als Ausgangsfeder bezeichnet wird zusammenarbeitet. Die Federn, die in das Material des Plastikrahmens eingespritzt sind, erstrecken sich im wesentlichen senkrecht zur Einführrichtung der Karte.

Bei Chipkartenlesern dieser Art ist üblicherweise ein als Rahmen ausgebildeter Kontaktträger vorgesehen und ein Endlagenschalter dient dazu, das Erreichen der Lesestellung durch die Chipkarte zu melden. Dieser Endlagenschalter wird beim Erreichen der Lesestellung entweder geschlossen oder geöffnet. Ein sich in Lesestellung schließender Endlagenschalter wird auch als "Schließer" bezeichnet, während ein sich in der Lesestellung öffnender Endlagenschalter auch als "Öffner" bezeichnet wird.

Die vorliegende Erfindung bezweckt einen Chipkartenleser ohne eine Absenkmechanik vorzusehen, wobei neben den Lesekontakten in einem Rahmen des Chipkartenlesers noch ein Endlagenschalter angeordnet ist, der in einfacher Weise sowohl als Öffner oder auch als Schließer ausgebildet sein kann.

Der Endlagenschalter soll ferner so ausgebildet werden, daß er in einfacher Weise im Rahmen anzuordnen ist. Ferner soll es möglich sein, mit einem Minimum an Schaltkontakten auszukommen, unabhängig davon, ob ein Öffner oder ein Schließer realisiert werden soll. Ferner wird eine ausgezeichnete Kontaktgabe zwischen den Schaltkontakten des Endlagenschalters angestrebt.

Zur Lösung der genannten Aufgabe sieht die Erfindung einen Chipkartenleser gemäß Anspruch 1 vor.

Bevorzugte Ausgestaltungen des Erfindung ergeben sich aus den abhängigen Ansprüchen.

Erfindungsgemäß ist der Rahmen sowohl bei Verwendung mit einem Öffner als auch bei Verwendung mit einem Schließer praktisch identisch und weist im Falle eines Schließers lediglich einen zusätzlichen Zapfen oder Anschlag auf, der bei der Realisierung eines Öffners nicht erforderlich ist. Der Rahmen besitzt ferner Anschlagmittel für den vorzugsweise in seine Ruhestellung vorgespannten beweglichen Schaltkontakt. Vorzugsweise sind die Anschlagmittel in der Form eines von der Kartenauflagefläche des Rahmens hochragenden Vorsprungs ausgebildet.

Weiterhin wird bevorzugt, daß der bereits erwähnte bewegliche Schaltkontakt und der stationäre Schaltkontakt des Endlagenschalters jeweils in ihrer Ruhestellung vorgespannt sind.

Jeder der Schaltkontakte ist zur Erhöhung der Herzschen Pressung mit einer zylinderförmige Sicke ausgebildet, so daß sich insgesamt zwei sich kreuzende Zylinder ergeben, was eine gute Kontaktgabe sicherstellt.

Gemäß einer weiteren bevorzugten Ausgestaltung der Erfindung wird zur Verbesserung des Reinigungseffektes zwischen den Schaltkontakten eine Vergrößerung der Normalkraft durch Schrägstellung der einen Kontaktfeder vorgesehen. Ferner wird vorzugsweise der eine Schaltkontakt mit mindestens zwei Kontaktschenkeln ausgebildet, wodurch die Sicherheit der Fremdschichtzerstörung nochmals erhöht wird. Vorzugsweise wird die Kontaktfläche der passiven oder stationären Kontaktfeder (Schaltkontakt) schräg gestellt, wodurch sich die Normalkraft erhöht und die beiden Schaltkontakte (Kontaktfedern) eine minimale Relativbewegung in der Federachse aufgrund der resultierenden Längskraft durchführen.

Gemäß einer bevorzugten Ausgestaltung der Erfindung können unterschiedliche Chipkartenformen kontaktiert werden, da der Endlagenschalter nicht durch die Dicke der Karte geschaltet wird. Beispielsweise ist es möglich, den erfindungsgemäßen Endlagenschalter auch zusammen mit einem sogenannten Schlüssel zu verwenden, d.h. einem schlüsselartigen Gebilde- von größerer Dicke als eine normale Chipkarte. Dieses schlüsselartige Gebilde trägt den Kontakten einer Chipkarte entsprechende Kontaktzonen, die von den Lesekontakten kontaktiert werden, nachdem der Endlagenschalter betätigt wurde.

Eine weitere bevorzugte Ausgestaltung der Erfindung sieht vor, daß mindestens wiederum eine der beiden Kontaktfedern eines Endlagenschalters schräg gestellt ist. Das heißt, das Kontaktende der einen Kontaktfeder liegt auf einem schräg verlaufenden Ende der anderen Kontaktfeder auf. Bei der bevorzugten Ausgestaltung ist dabei die das schräg verlaufende Kontaktende besitzende Kontaktfeder gegen einen Anschlag hin vorgespannt, der nicht unter dem schrägen Kontaktende der Kontaktfeder liegt, sondern der zum Einspannende dieser Kontaktfeder hin versetzt ist. Vorzugsweise ist der Anschlag in etwa in der Mitte dieser Kontaktfeder angeordnet. Der Anschlag kann aber auch relativ dicht am - freien - Kontaktende dieser Kontaktfeder, oder aber auch relativ dicht an der Einspannstelle dieser Kontaktfeder angeordnet sein. Durch diese Anordnung ergibt sich, daß die durch die Karte betätigbare (aktive) Kontaktfeder in der Schließstellung des Endlagenschalters auf der Schräge der erstgenannten (passiven) Kontaktfeder aufliegt. Vorzugsweise ist die durch die Karte betätigbare Kontaktfeder in der Schließstellung des Endlagenschalters so stark gegen das freie Ende der passiven Kontaktfeder vorgespannt, daß dieses etwas aus seiner ansonsten durch die Vorspannung bestimmten Ruhestellung herausbewegt ist, wodurch die Selbstreinigungskräfte des Endlagenschalters verbessert werden.

Weitere Vorteile, Ziele und Einzelheiten der Erfindung ergeben sich aus der Beschreibung von Ausführungsbeispielen anhand der Zeichnung; in der Zeichnung zeigt:
- Fig. 1A: eine Draufsicht auf den Rahmen eines erfindungsgemäßen Chipkartenlesers bei abgenommenem Deckel und mit einem erfindungsgemäßen als Schließer zu bezeichnenden Endlagenschalter;
- Fig. 1B: eine vergrößerte Einzelheit des Endlagenschalters der Fig. 1A;
- Fig. 2A: eine Draufsicht ähnlich Fig. 1A, wo aber hier der Schließer geschaltet ist, also die Chipkarte sich in ihrer Lesestellung befindet;
- Fig. 3: eine Draufsicht auf einen Teil des Rahmens eines Chipkartenlesers mit einem als Öffner ausgebildeten Endlagenschalter, der in seinem ungeschalteten Zustand dargestellt ist;
- Fig. 4: eine Ansicht ähnlich Fig. 3, wobei aber hier der Öffner in seinem geschalteten Zustand dargestellt ist;
- Fig. 5: eine schematische vergrößerte Seitenansicht der Schaltteile der beiden Schaltkontakte;
- Fig. 6: einen Teilschnitt durch einen erfindungsgemäßen Chipkartenleser mit einem nichtgeschalteten Öffner;
- Fig. 7: eine schematische Schnittdarstellung durch einen erfindungsgemäßen Chipkartenleser zur Veranschaulichung der Betätigungsmöglichkeiten der erfindungsgemäßen Endlagenschalters durch eine normale Chipkarte wie auch durch einen sogenannten "Schlüssel";
- Fig. 8: eine Draufsicht auf einen Teil eines Stanzstreifens, der die beweglichen und statischen Schaltkontakte des Endlagenschalters in deren Rohzustand hält;
- Fig. 9 und 10: einen Schnitt längs Linie 9-10 in Fig. 8;
- Fig. 11: eine Draufsicht auf den beweglichen Schaltkontakt nach Abtrennung vom Stanzstreifen und vor der in den Fig. 12 bis 15 gezeigten Verformung;
- Fig. 16: eine Draufsicht auf den stationären Schaltkontakt nach Abtrennung vom Stanzstreifen und vor seiner Umformung gemäß den Fig. 17 bis 20.
- Fig. 21: eine Darstellung ähnlich Fig. 3, wobei aber hier Schaltkontakte zwar ähnlich wie in Fig. 3 verwendet werden, aber hier mit Schrägstellung einer der beiden Kontaktflächen;
- Fig. 22: einen Schnitt längs Linie 22 - 22 in Fig. 21;
- Fig. 23: eine schematische Darstellung der Anordnung gemäß Fig. 21, und
- Fig. 24: eine schematische Draufsicht auf die Anordnung gemäß Fig. 23.
- Fig. 25: eine schematische Seitenansicht eines Chipkartenlesers mit einem weiteren Ausführungsbeispiel eines Endlagenschalters;
- Fig. 26: eine Draufsicht auf die Darstellung der Fig. 25 mit dem Endlagenschalter;
- Fig. 27: eine schematische Darstellung des Prinzips des Endlagenschalters gemäß Fig. 26;
- Fig. 28: schematisch einen Endlagenschalter gemäß dem Stand der Technik.
- Fig. 29A -B: ein Vergleich bekannter Endlagenschalter mit einem Endlagenschalter der Erfindung.

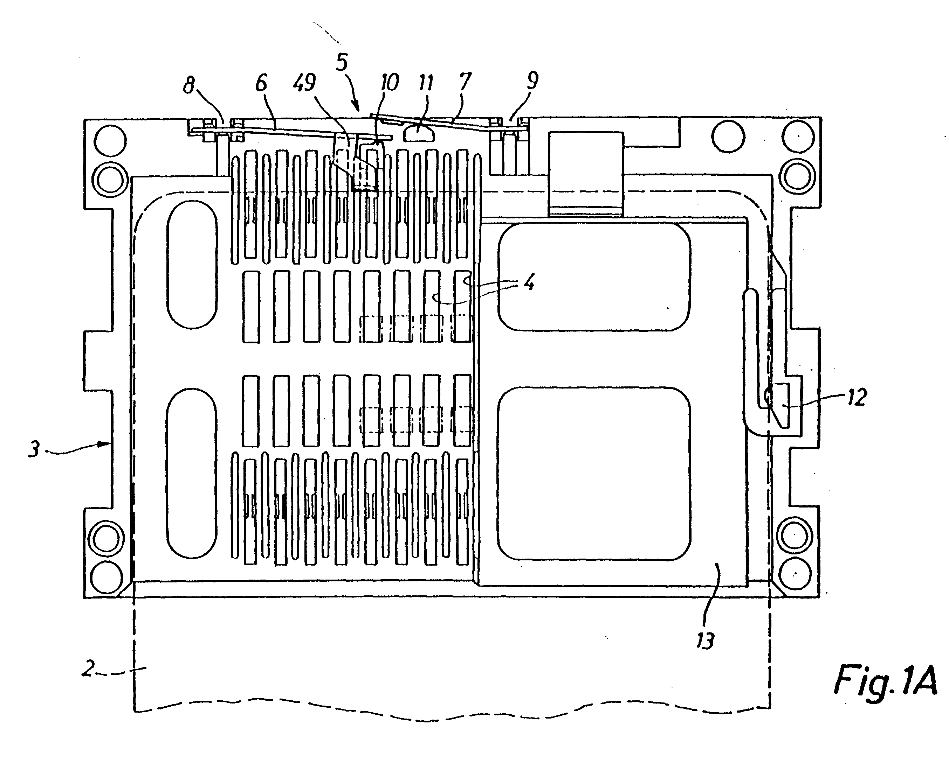

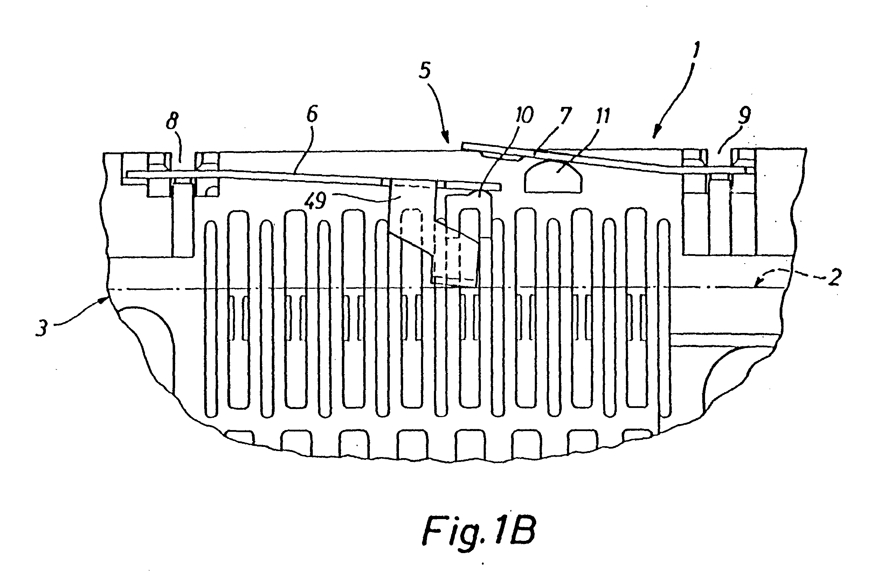

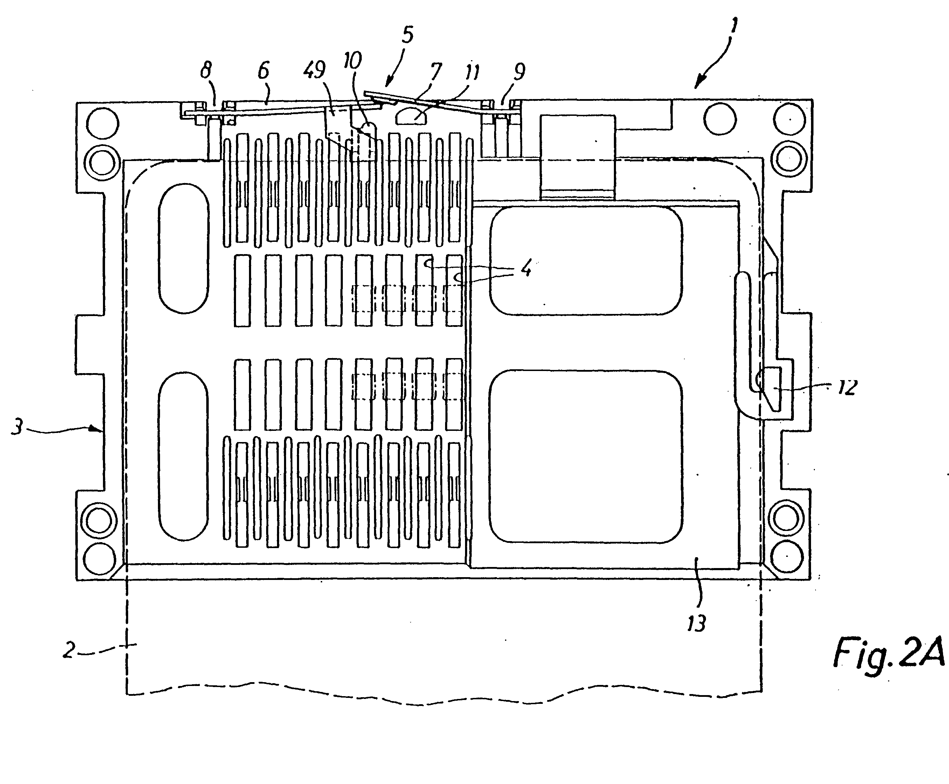

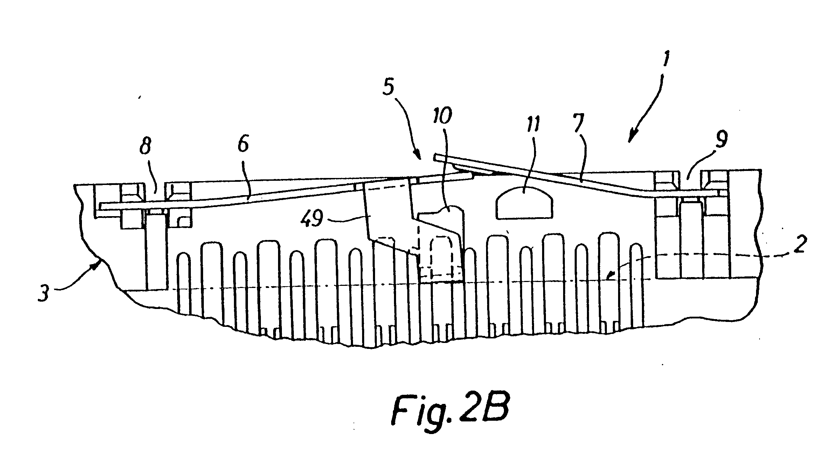

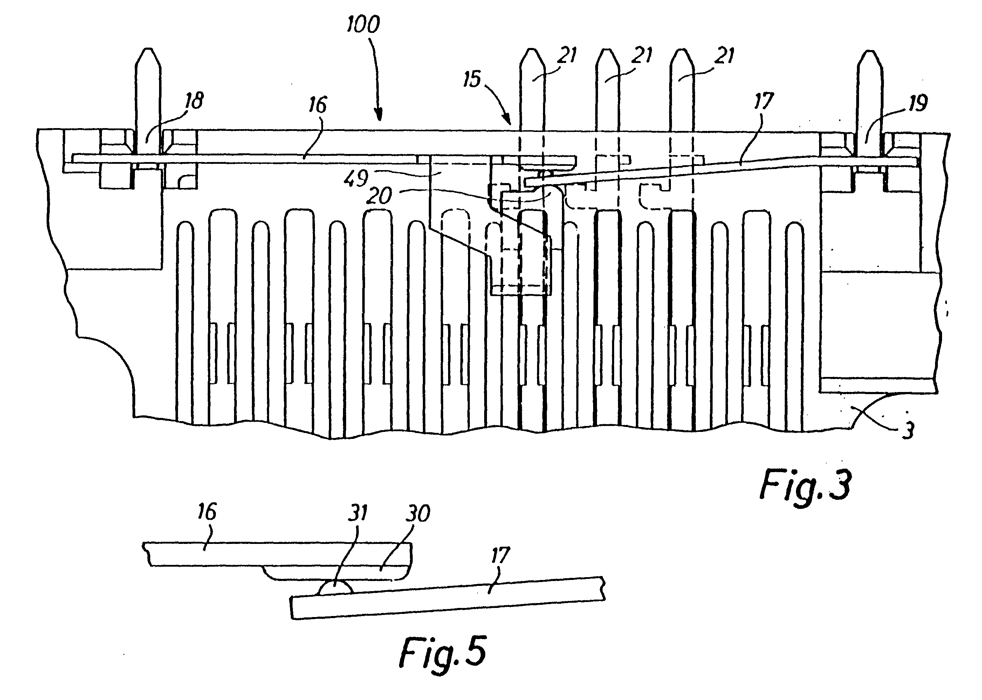

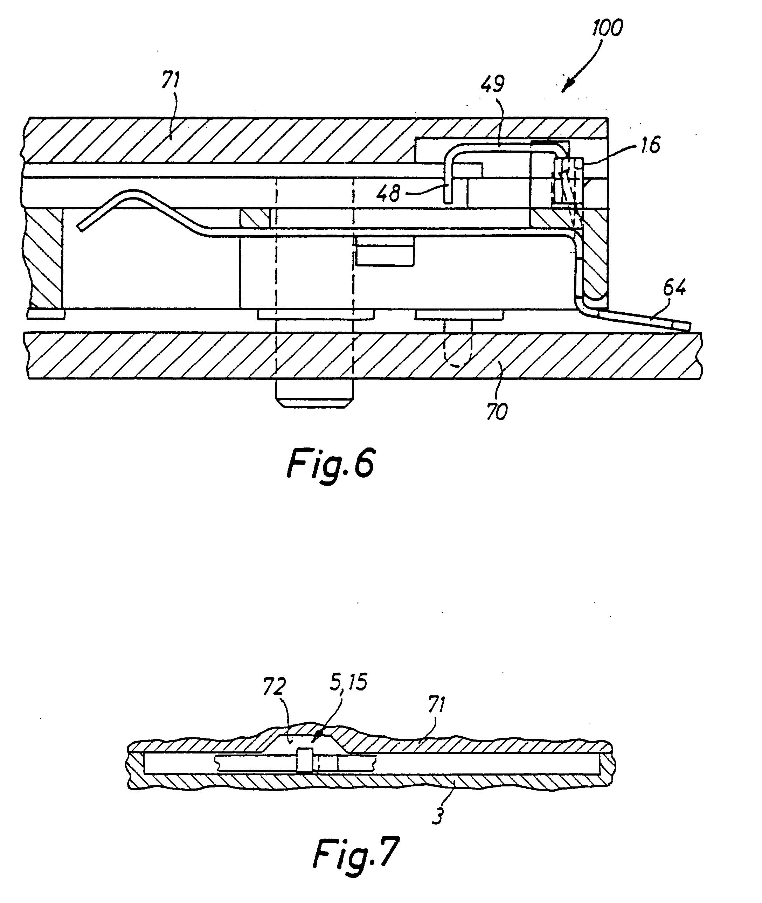

Im folgenden wird anhand der Fig. 1a, 1b, 2a und 2b ein erstes Ausführungsbeispiel der Erfindung und anhand der Fig. 3 und 4 sowie 6 ein zweites Ausführungsbeispiel der Erfindung beschrieben. Die Fig. 5 zeigt eine Ausgestaltung, die bei beiden Ausführungsbeispielen zweckmäßig ist und die Fig. 7 zeigt, daß die Erfindung auch bei sogenannten Schlüsseln eingesetzt werden kann. Fig. 8 bis 20 zeigen die bevorzugte erfindungsgemäße Ausbildung der Schaltkontakte der Endlagenschalter.

Die Fig. 1a, 1b, 2a und 2b zeigen einen Chipkartenleser 1, der dazu dient, eine Chipkarte 2 zu kontaktieren. Der Chipkartenleser 1 weist einen Rahmen 3 auf, in dem Öffnungen 4 für Lesekontakte dargestellt sind. Ein erfindungsgemäßer Endlagenschalter 5 ist also sogenannter "Schließer" ausgebildet und wird aus der in den Fig. 1A und 1B gezeigen Öffnungsposition in die in Fig. 2A und 2B gezeigte Schließposition durch verschieben der Karte 2 in ihre Leseposition gebracht.

Der Endlagenschalter 5 weist einen beweglichen Schaltkontakt 6 und einen stationären Schaltkontakt 7 auf. Der Schaltkontakt 6 ist durch noch näher zu beschreibenende Mittel, insbesondere eine Rastzunge 46 in einer im Rahmen 3 ausgebildeten Rastausnehmung 8 verrastet und dadurch befestigt. In ähnlicher Weise ist auch der statische Schaltkontakt 7 in einer Rastausnehmung 9 im Rahmen 3 durch eine Rastzunge 66 befestigt.

Im eingebauten Zustand ist der bewegliche Schaltkontakt 6 gegen einen Anschlag 10 vorgespannt, der aus der durch die Kartenauflagefläche 13 gebildeten Ebene herausragt. Auch der statische Schaltkontakt 7 ist in seiner Ruhestellung vorzugsweise gegen Anschlagmittel, vorzugsweise in der Form eines Zapfens 11 vorgespannt. Der Zapfen 11 ragt ebenso wie der Anschlag 10 aus der Kartenauflagefläche heraus. Sowohl Anschlag 10 als auch Zapfen 11 sind vorzugsweise zusammen mit dem Rahmen 3 durch Spritzguß hergestellt.

Es ist ohne weiteres ersichtlich, daß beim Einschieben der Chipkarte 2 schließlich - vergleiche Fig. 1A - der bewegliche Schaltkontakt 6 erfasst wird und wie in Fig. 2A und 2B gezeigt, zur Kontaktgabe mit dem stationären Schaltkontakt 7 hin bewegt wird. Man erkennt, daß der als stationär bezeichnete Schaltkontakt 7 nicht vollständig stationär ist, sondern vielmehr wie in Fig. 2B im Falle der Kontaktgabe mit dem beweglichen Schaltkontakt 6 etwas von dem Zapfen 11 federnd abgehoben werden kann.

Der Rahmen 3 bildet ferner erfindungsgemäß einen Zentrier- und Bremshebel 12 der seitlich auf die Chipkarte drückt und damit die Führungstoleranz in der Kartenführung eliminiert und gleichzeitig eine Bremswirkung auf die Karte ausübt, ohne daß die Kontaktkraft positiv oder negativ beeinflußt wird.

Die Fig. 3, 4 und 6 zeigen einen Chipkartenleser, der mit dem Chipkartenleser 1 weitgehend übereinstimmt. Der Rahmen 3 des Chipkartenlesers 100 stimmt mit dem Rahmen 3 des Chipkartenlesers 1 mit der Ausnahme überein, daß beim Ausführungsbeispiel gemäß den Fig. 3, 4 und 6 kein Zapfen 11 vorhanden ist.

Der Endlagenschalter 15 ist als sogenannter Öffner ausgebildet, d. h. bei Betätigung durch die Karte 2 öffnet sich der Endlagenschalter.

Erfindungsgemäß weist der Endlagenschalter 15 wiederum einen beweglichen Schaltkontakt 16 und einen stationären Schaltkontakt 17 auf, die ebenso wie die Kontakte 6 und 7 in entsprechenden Rastausnehmungen 18 und 19 des Rahmens 3 durch Einrasten befestigt sind.

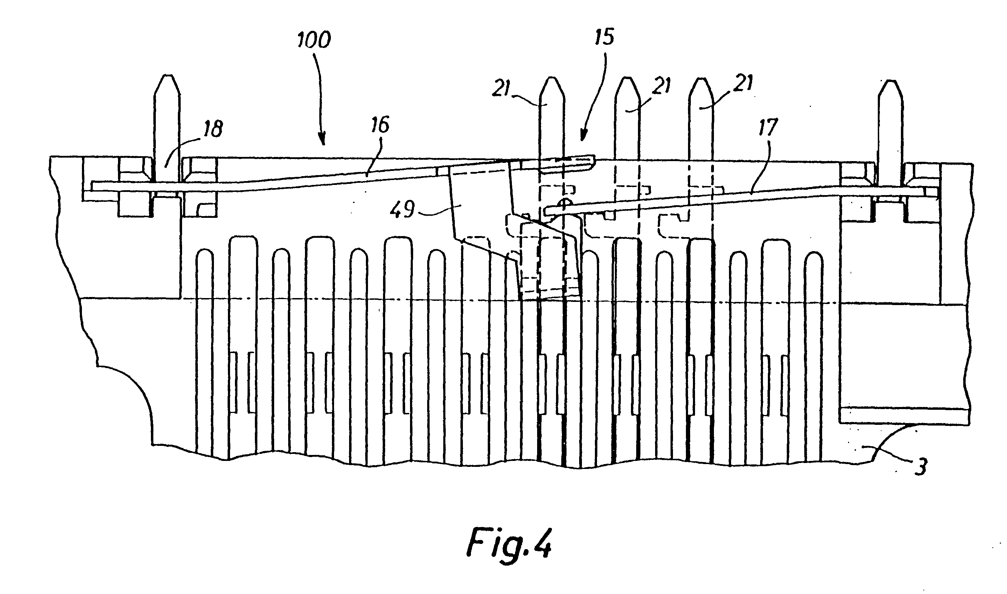

Der Anschlag 20 entspricht dem Anschlag 10, wobei aber gemäß Fig. 3 und 4 der hier tatsächlich stationäre Schaltkontakt 17 vorzugsweise elastisch vorgespannt am Anschlag 20 anliegt.

Anders als beim ersten Ausführungsbeispiel ist hier der Endlagenschalter 15 als sogenannter Öffner ausgebildet, d. h. beim Einschieben der Karte wird die Kontaktgabe zwischen den beweglichen Schaltkontakt 16 und dem stationären Schaltkontakt 17 geöffnet.

Wie man in Fig. 3 erkennt, sind in der Schließstellung des Endlagenschalters 15 der stationäre 17 gegen den Anschlag 20 vorgespannt, und der bewegliche Schaltkontakt 16 ist ebenfalls zum Anschlag 20 hin vorgespannt und liegt auf dem stationären Kontakt auf. Die Fig. 3 und 4 zeigen auch noch die Anordnung einiger, mit 21 bezeichneter Lesekontakte.

Erfindungsgemäß sind die beweglichen Kontakte 6 und 16 und auch die stationären Kontakte 7 und 17 identisch ausgebildet, so daß mit den gleichen Kontaktelementen ein Schließer bzw. ein Öffner gebildet werden kann.

Allerdings ist bei der bevorzugten Verwendung von zylinderförmigen Ausbuchtungen oder Sicken, die sich in ihrer Anordung vorzugsweise kreuzen, die Ausbuchtung für den Fall des Schließers umgekehrt wie in Fig. 5 gezeigt, vorzusehen. Fig. 5 zeigt am beweglichen Schaltkontakt 16 eine als Zylinder ausgebildete Sicke 30, die in Richtung der Längserstreckung des Schaltkontakts 16 verläuft. Hingegen zeigt der Schaltkontakt 17, eine quer zu seiner Längserstreckung verlaufenden Sicke 31 in der Form eines Zylinders.

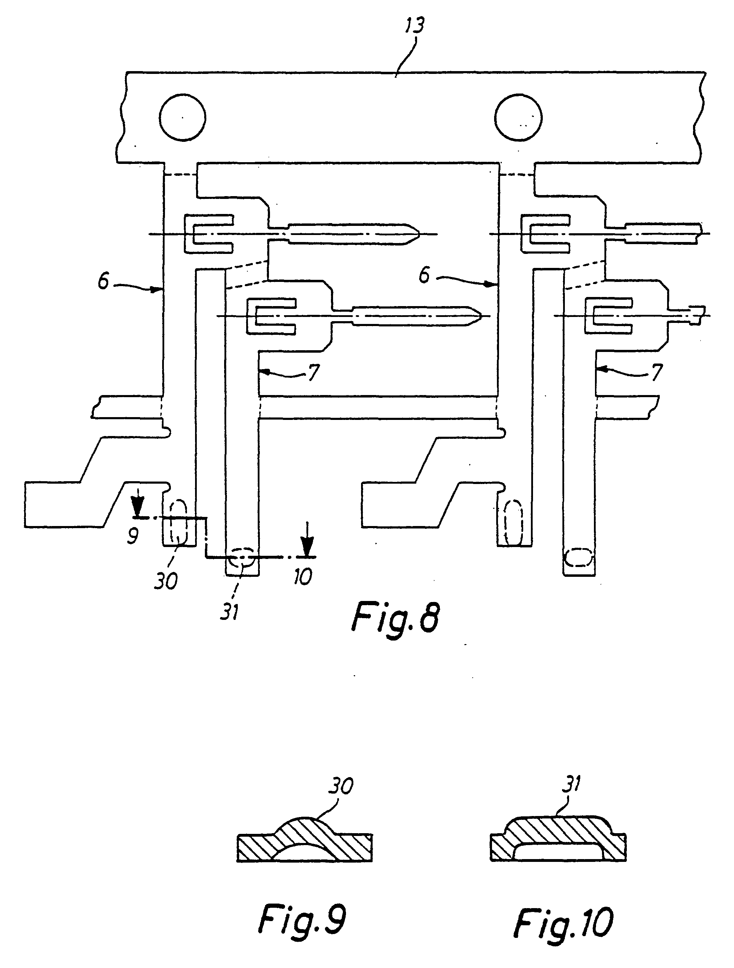

Die Fig. 6 veranschaulicht den Chipkartenleser 100, und zwar angebracht auf einer gedruckten Schaltungsplatte 70, wobei man hier noch einen zu erläuternden Lötanschluß 64 erkennt. Ferner ist ein Deckel 71 dagestellt.

Die Fig. 7 zeigt schematisch daß der erfindungsgemäße Endlagenschalter 5, 15 sowohl durch eine normale Karte 2 betätigbar ist, wie auch durch einen sogenannten Schlüssel, der auch eine größere Dickenabmessung besitzt und im Deckel 71 eine Ausbuchtung 72 erforderlich macht.

Fig. 8 zeigt die Schaltkontakte 6, 16, 7, 17 nach dem Ausstanzen noch an einem Pilotstreifen 13 hängend. Fig. 9 und 10 veranschaulichen die Form der zylindrischen Sicken 30, 31.

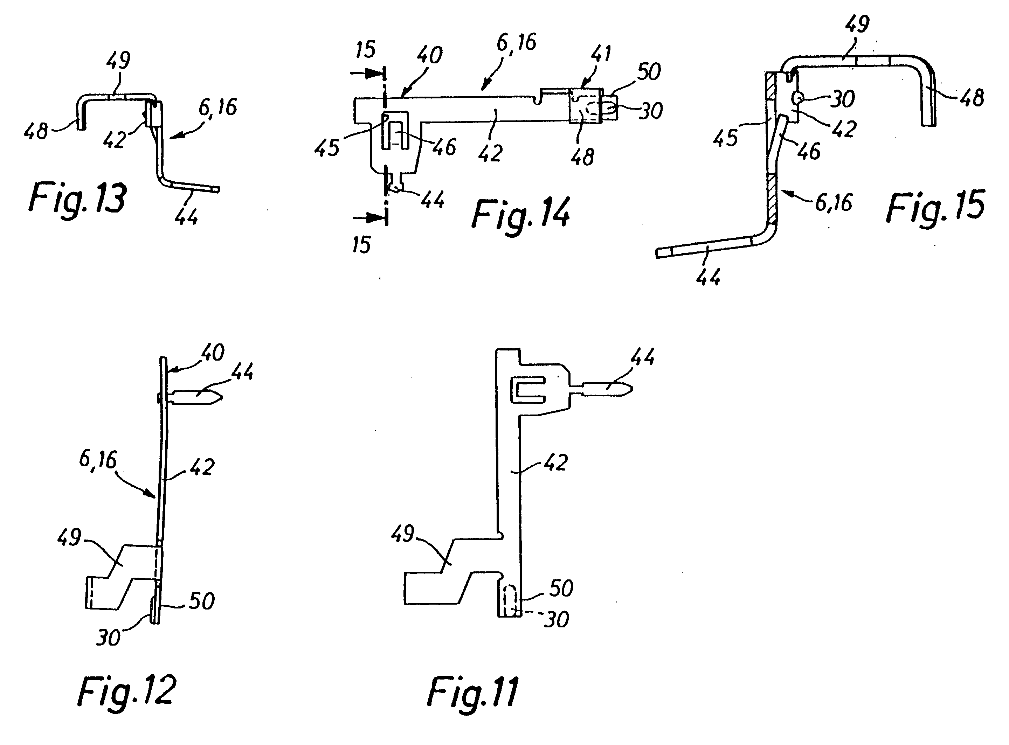

Die Fig. 11 bis 15 zeigen den beweglichen Schaltkontakt 6 bzw. 16 in verschiedenen Herstellungsstufen und Darstellungen. Der Schaltkontakt 6 bzw. 16 weist einen Rast- und Anschlußteil (Rastteil) 40 auf, sowie ein Betätigungs- und Schaltteil (Schaltteil) 41, die durch ein streifenförmiges Verbindungsteil 42 verbunden sind. Ein Lötanschluß 44 kann beispielsweise für die SMD Technik ausgebildet sein. Der Rostteil 40 bildet einen Ausschnitt 45 zur Ausformung einer Rastzunge 46, welche die in Fig. 15 gezeigte Form besitzt. Gleichzeitig bildet der Rastteil 40 Führungsflächen für das Einsetzen in die Ausnehmung des Rahmens. Der Schaltteil 41 bildet einmal einen Anschlagwinkel mit einem Kartenanschlag 48, der an einem Winkelarm 49 ausgebildet ist. Ferner ist ein Kontaktarm 50 vorgesehen, der die erwähnte Sicke 30 aufweist.

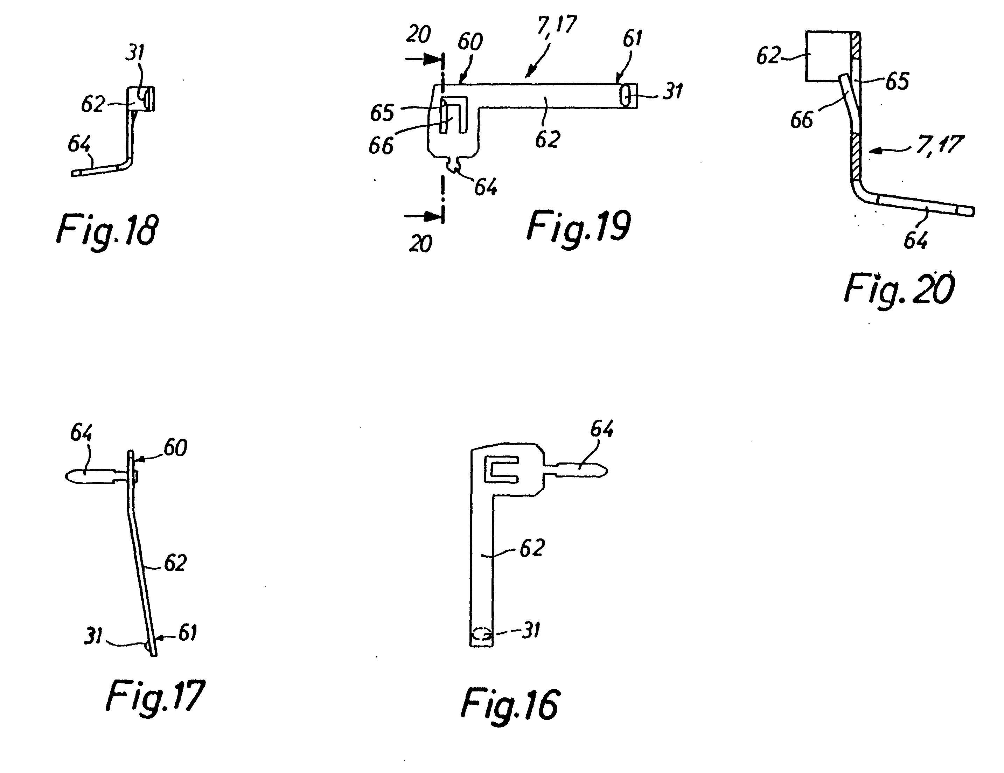

Die Fig. 16 bis 20 veranschaulichen den stationären Schaltkontakt 7, 17 in seinen verschiedenen Herstellungsstufen. Ein Rast- und Anschlußteil 60 steht über einem Verbindungsteil 62 mit einem Betätigungs- und Schaltteil 61 in Verbindung. Der Rastteil 60 ist ähnlich wie der Rastteil 40 ausgebildet und weist eine Rastzunge 66 umgeben von einem Ausschnitt 45 auf. Ein Lötanschluß 64 ist ferner vorgesehen. Dieser Anschluß 64 kann auch ebenso wie der Anschluß 44 in beliebiger Weise ausgebildet sein. In Fig. 19 erkennt man ferner noch die Ausbildung der Sicke 31 im Schaltteil 61.

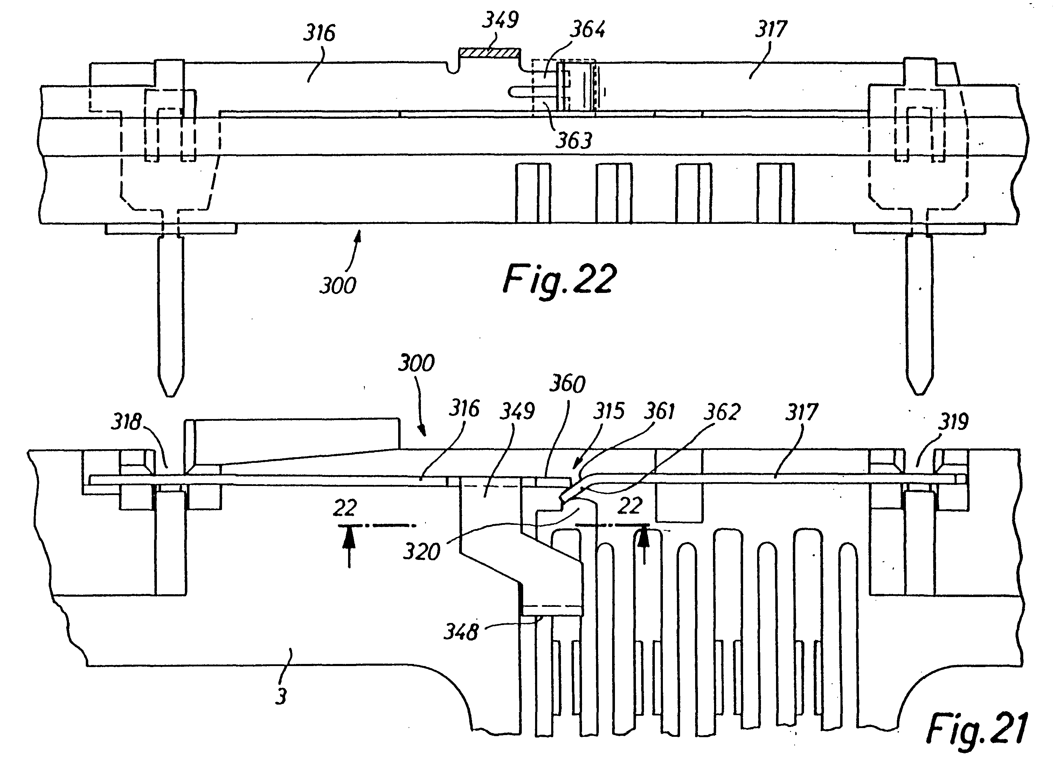

Die Fig. 21 bis 24 zeigen einen Chipkartenleser 300, der mit dem Chipkartenleser 3 gemäß Fig. 3 weitgehend übereinstimmt.

Der Endlagenschalter 315 ist als sogenannter Öffner ausgebildet, d. h. bei Betätigung durch die Karte 2 öffnet sich der Endlagenschalter 315. Es ist auch die Ausbildung als Schließer unter Verwendung der erfindungsgemäßen Prinzipien möglich.

Erfindungsgemäß weist der Endlagenschalter 315 wiederum einen beweglichen Schaltkontakt 316 und einen stationären Schaltkontakt 317 auf, die ebenso wie die Kontakte 16 und 17 gemäß Fig. 3 in entsprechenden Rastausnehmungen 318 und 319 des Rahmens 3 durch Einrasten befestigt sind.

Der Anschlag 320 entspricht dem Anschlag 20. Wie bei Fig. 3 und 4 liegt der stationäre Schaltkontakt 317 vorzugsweise elastisch vorgespannt am Anschlag 320 an.

Wie beim Ausführungsbeispiel gemäß Fig. 3 ist auch hier der Endlagenschalter 315 als sogenannter Öffner ausgebildet, d. h. beim Einschieben der Karte 2 wird die Kontaktgabe zwischen den beweglichen Schaltkontakt 316 und dem stationären Schaltkontakt 317 geöffnet.

Wie man in Fig. 21 erkennt, sind in der Schließstellung des Endlagenschalters 315 der stationäre Schaltkontakt 317 gegen den Anschlag 320 vorgespannt, und der bewegliche Schaltkontakt 316 zum Anschlag 320 hin vorgespannt, wobei letzterer auf dem stationären Kontakt aufliegt.

Der Schaltkontakt 316 gemäß Fig. 21 bis 24 weist den selben Grundaufbau auf wie der bewegliche Kontakt 42 gemäß Fig. 14. Insbesondere ist der Schaltkontakt 316 mit einem Winkelarm 349 sowie einem daran angeordneten Kartenanschlag 348 ausgestattet. Anders als beim Ausführungsbeispiel gemäß Fig. 4 ist am Ende 360 des Schaltkontakts 316 Uund auch bei 317) keine Sicke ausgebildet, sondern gegenüber dem Schaltkontakt 16 ist der Schaltkontakt 316 etwas verkürzt und liegt mit seinem Endteil 360 an einer Schrägfläche 361 an, die vom Endteil 362 des Schaltkontakts 317 gebildet ist. Der Endteil 362 ist wie gezeigt gegenüber dem größeren Teil des Schaltkontakts 317 abgewinkelt.

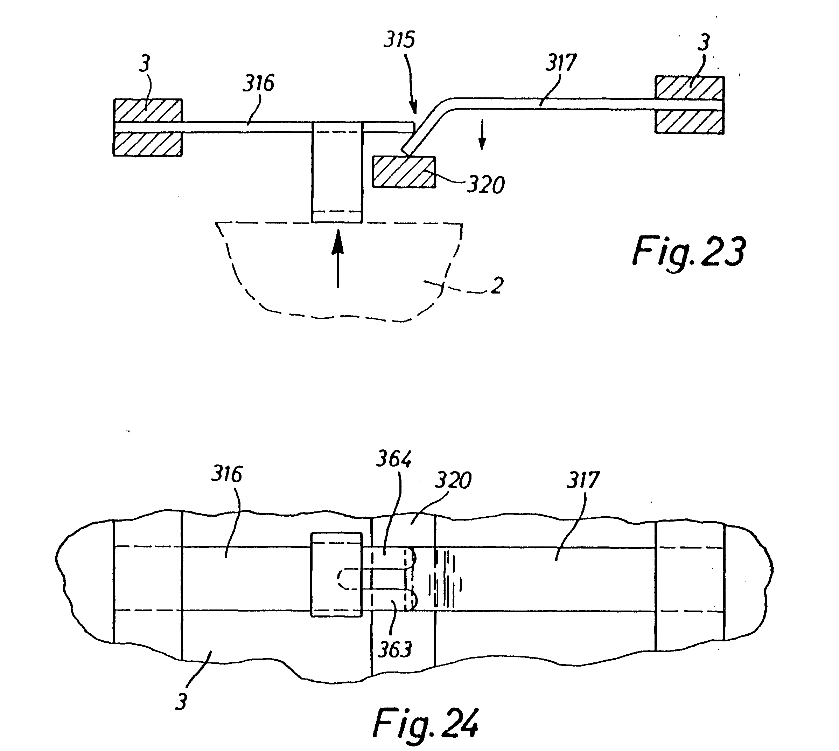

Vorzugsweise bildet der Endteil 360 zwei Schenkel (vgl. Fig. 23 und 24) 363, 364. Die Schenkel können vorzugsweise (vgl. Fig. 24) an ihren mit der Schrägfläche 361 in Kontakt stehenden Enden abgrundet sein.

Wie bereits erwähnt, ist der Schaltkontakt 317 in der Form einer Kontaktfeder gegen den Anschlag 320 vorgespannt und kann als ein im ganzen passiver Schaltkontakt angesehen werden. Auch der Schaltkontakt in der Form der Kontaktfeder 316 ist vorgespannt und liegt auf der Schrägfläche 361 auf.

Insbesondere durch die Wahl der Vorspannkraft für den Schaltkontakt 316 ist die Anordnung derart getroffen, daß an den Kontaktstellen zwischen dem vorderen Ende 360 und der schrägen Kontaktfläche 361 eine gewisse Relativbewegung beim Schalten auftritt, sodaß vorhandener Schmutz oder Staub im Bereich der Kontaktgabe beseitigt wird. Während also die Kontaktfeder 317 im ganzen als passive oder unbeweglich bezeichnet werden kann, ist sie dennoch in der Lage, eine ausreichende Relativbewegung gegenüber der Kontaktfeder 316 auszuführen.

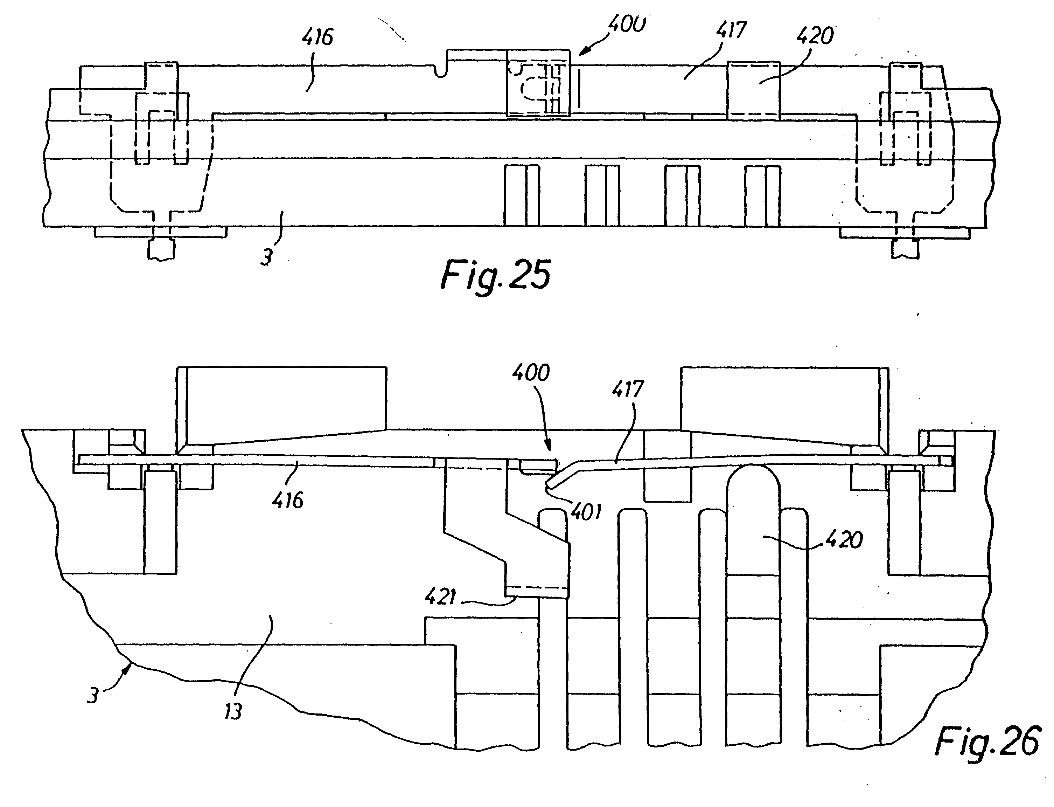

Anhand der Figuren 25 bis 27 sei ein weiteres Ausführungsbeispiel der Erfindung beschrieben, und zwar ein Endlagenschalter in der Form eines sogenannten Öffners. Der Endlagenschalter 400 gemäß den Fig. 25 bis 27 weist zwei Schaltkontakte in der Form von Kontaktfedern 416 und 417 auf, die jeweils an ihrem einen Ende im Rahmen 13 vorzugsweise durch Einrasten befestigt sind. Die (aktive) Kontaktfeder 416 ist durch eine Chipkarte aus der gezeigten Schließstellung in eine Öffnungsstellung bewegbar.

Der Hauptunterschied zwischen der Konstruktion gemäß den Fig. 25 bis 27 und der Konstruktion gemäß den Fig. 23 und 24 besteht darin, daß der Anschlag 21 gemäß Fig. 23 und 24 nunmehr in der Form eines Anschlags 420 vom freien Ende der Kontaktfeder weg zur Einspannstelle der Kontaktfeder hin versetzt ist. Die passive Kontaktfeder 417 ist gegen den Anschlag 420, der vorzugsweise am Rahmen 3 ausgebildet ist vorgespannt. Der Anschlag 420 liegt in entwa mittig zwischen dem freien Ende 401 der Kontaktfeder 417 und der Einspannstelle 402 der Kontaktfeder 417. Der Anschlag 420 nimmt vorzugsweise die in Fig. 26 gezeigte Position ein, kann aber auch wenn dies gewünscht ist sowohl nach rechts zur Einspannstelle 402 hin, wie auch nach links zum freien Ende 401 der Kontaktfeder hin verschoben sein.

In der in Fig. 26 gezeigten Schließstellung des Endlagenschalters 400 ist die Kontaktfeder 416 vorzugsweise derart gegen die Schräge 403 der Kontaktfeder 417 gespannt, daß das freie Ende 401 der passiven Feder 417 etwas nach unten gegenüber der Position gedrückt ist, die die Feder 417 aufgrund ihrer Vorspannung ohne das Vorhandensein der Kontaktfeder 416 einnehmen würde. Dies hat dann zur Folge, daß bei Betätigung der Kontaktfeder 416 durch die Chipkarte bei der (in Fig. 26) nach oben erfolgenden Bewegung die Kontaktfeder 417 zunächst mit der Kontaktfeder 416 mitläuft, bevor diese von der Schräge 403 abhebt. Dies unterstützt zusammen mit der genannten Schräge und der verhältnismäßig scharfen Eingriffskante 405 der Kontaktfeder 416 den Reinigungseffekt zwischen den beiden Kontaktfedern, so daß auch nach längeren Zeiträumen eine sichere Kontaktgabe gewährleistet wird.

Vorzugsweise ist der Eingriffswinkel α zwischen der vorzugsweise im Ganzen geradlinig verlaufenden Kontaktfeder 416 und der Schräge 403 der ansonsten ebenfalls vorzugsweise geradlinig verlaufenden Kontaktfeder 417 in etwa 45°. Bevorzugt ist auch der Bereich zwischen 20° und 60°.

In Fig. 25 bis 28 ist mit den Bezugszeichen 421 der Anschlag für die Chipkarte bezeichnet. Die Bezugszeichen 423, 424, 425 bezeichnen schematisch Kraftwirkungen.

Dadurch, daß die auch als Ruhekontakt zu bezeichnende passive Kontaktfeder 417 nunmehr derart vorgespannt ist, daß der Anschlag 420 näher an den Einspannpunkt 402 hingerückt ist, erlangt man eine größere Relativbewegung zwischen der Kontaktfeder 416 und der Kontaktfeder 417, wodurch sich eine bessere Kontaktgabe und eine größere Kontaktkraft ergibt. Ferner kann auch nach längerer Zeit sicher geschaltet werden.

Es ist wichtig, darauf hinzuweisen, daß die beiden Kontaktfedern 416, 417 vorzugsweise voneinander weglaufen, aber im wesentlichen auf einer Linie liegen, und zwar unter Bildung der Schräge 403, um so die gewünschten Kontaktreinigungskräfte zu erreichen.

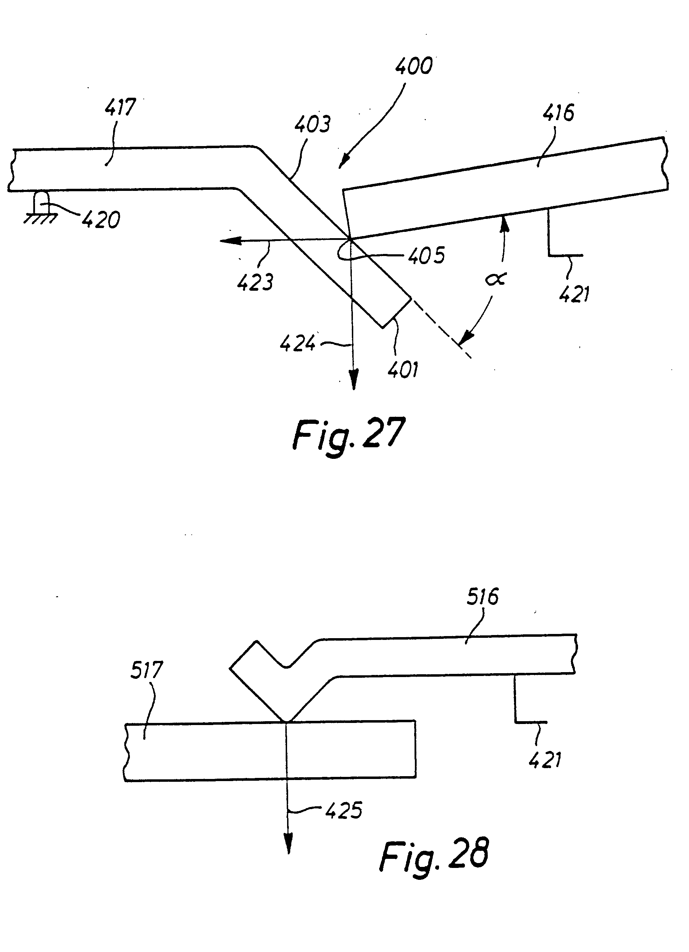

Die Fig. 28 zeigt noch schematisch einen bekannten Endlagenschalter mit zwei Kontaktfedern 516 und 517, wobei hier die Feder 517 nicht - gegen einen Anschlag - vorgespannt ist, sondern in der Ruhestellung des Endkontaktes durch die Kontaktfeder 516, die ihrerseits nach unten gespannt, aber nicht vorgespannt ist, nach unten gedrückt wird. Insbesondere auch wegen der fehlenden Schräge zwischen den beiden Kontaktfedern 516 und 517 im Bereich der Kontaktierung treten weniger günstige Verhältnisse auf, als beim Ausführungsbeispiel gemäß Fig. 27.

Zusammenfassend wird also bei dem Ausführungsbeispiel gemäß den Fig. 25 bis 27 zur Erzielung einer Relativbewegung der Kontaktfedern 416, 417 vorgesehen den Anschlag 420 der passiven Feder 417 zur Einspannstelle 402 hinzuverlegen. Die Durchführung des freien Federarms aufgrund der Auflagekraft der aktiven Feder 416 verursacht einen erwünschten Schleifweg. Es ergibt sich eine größere Relativbewegung, die beispielsweise mindestens in der Größenordnung von 0,2 mm liegt. Ferner ergibt sich eine höhere Normalkraft, ohne daß die Auflagekraft für die Karte erhöht wird. Darüber hinaus wird eine Punktberührung statt einer Flächenberührung vorgesehen. Während bei der Konstruktion gemäß den Fig. 23 und 24 vorzugsweise zwei Schenkel 363, 364 vorgesehen werden, wird bei der Konstruktion gemäß den Fig. 25 bis 27 vorzugsweise nur ein Kontaktfinger für den aktiven Kontakt 416 vorgesehen.

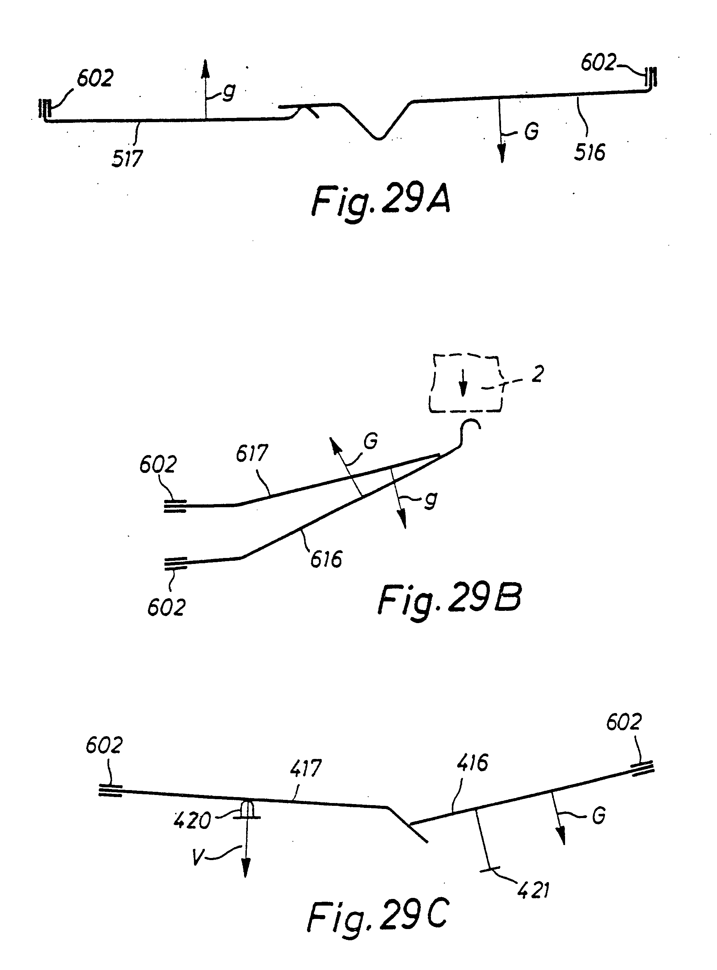

Die Fig. 29a, 29b und 29c veranschaulichen in Fig. 29a schematisch den Stand der Technik gemäß Fig. 28, in Fig. 29b einen weiteren bekannten Endlagenschalter und Fig. 29c den erfindungsgemäßen Endlagenschalter gemäß Fig. 27.

Die Befestigungsstelle der Kontaktfedern ist jeweils mit dem Bezugszeichen 602 bezeichnet. Bei der Anordnung gemäß Fig. 29a ist durch den Buchstaben G angedeutet, daß die Kontaktfeder 516 die Kontaktfeder 517 in die gezeigte Schließposition bewegt hat, und zwar entgegen einer kleineren, durch den Buchstaben g dargestellten Kraft der Feder 517. In der gezeigten Schließstellung sind natürlich die von den Kontaktfedern 516 und 517 aufeinander ausgeübten Kräfte gleich null. Wenn aber die Chipkarte die Kontaktfeder 516 (nach oben) bewegt, so folgt die Kontaktfeder 517 anfangs dieser Bewegung bis die Kontaktfeder 517 ihre nicht mehr gespannte Position erreicht. Bei der Konstruktion gemäß Fig. 29b sind die beiden Kontaktfedern 616 und 617 so angeordnet, daß die gezeigte Schließstellung dadurch erreicht wird, daß die Kontaktfeder 617 anfangs eine größere Kraft G besitzt und demzufolge die Kontaktfeder 617 in die gezeigte Stellung vorspannt, bis sich die von den Kontaktfedern 617 und 616 aufeinander ausgeübten Kräfte aufheben. Die Kontaktfeder 617 wird also anfangs entweder keine oder nur eine kleinere Kraft als die Kraft G nach unten ausüben, die schematisch in Fig. 29b mit g bezeichnet ist. Die Folge dieser Anordnung ist die, daß bei einer Verschiebung der Kontaktfeder 616 durch die Karte 2 nach unten die obere Kontaktfeder 617 zunächst ein Stück mitgeht, und an der Kontaktfeder 616 schleift, bis dann die Spannkraft der Kontaktfeder 617 abgebaut ist und nur noch die Kontaktfeder 617 durch die Karte 2 weiterbewegt und dadurch auch weiter gespannt wird, was aber die Öffnung des Schalters zur Folge hat.

Beim erfindungsgemäßen Endlagenschalter gemäß Fig. 29c ist die sogenannte passive Kontaktfeder 417 mit einer Kraft V gegen den Anschlag 420 vorgespannt. Zudem übt die Kontaktfeder 416 anfangs, also vor Erreichen der gezeigten Schließstellung eine größere Kraft G auf die Schräge der Kontaktfeder 417 aus und spannt diese sozusagen um den Anschlag herum etwas nach unten, so daß die Kontaktfeder 417 mit ihrer Schräge sich nach unten bewegt, bis die dadurch entstehende Reaktionskraft gleich der von der Kontaktfeder 416 ausgeübten Kraft ist. Der Erfolg davon ist, daß dann, wenn eine Karte gegen den Kartenanschlag 421 stößt, die Kontaktfeder 416 nach oben entgegen ihrer Spannkraft bewegt wird, wobei zunächst die Schräge der Kontaktfeder 417 dem vorderen Ende der Kontaktfeder 416 folgt, bis die Kontaktfeder 416 von dieser Schräge freikommt. Während dieser anfänglichen Mitbewegung der Schräge der Kontaktfeder 417 entsteht ein guter Kontakt zwischen dem freien Ende der Kontaktfeder 416 und der Schräge der Kontaktfeder 417. Durch diese Wirkung werden Fremdschichten durchstoßen, und es ergibt sich eine Kontaktreinigung. Insbesondere tritt ferner eine Keilwirkung zwischen dem freien Ende der Kontaktfeder 416 und der Schrägfläche dann auf, wenn die Kontaktfeder 416 auf die Schräge auf die Kontaktfeder 417 aufläuft, wobei sich hier ein zunehmender Anstieg der Kontaktkraft ergibt, was wiederum zu Kontaktreinigung und auch zu einer guten Kontaktgabe führt. Gerade die im letztgenannten Falle auftretende Keilwirkung, die zu einer guten Kontaktgabe führt, ist in der Praxis von besonderer Bedeutung, da üblicherweise der Endlagenschalter gemäß Fig. 29c ggf. über einen längeren Zeitraum hinweg bei eingesetzter Karte geöffnet sein kann, wobei es dann gerade darauf ankommt, daß dann, wenn nach diesem längeren Zeitraum die Karte entnommen wird, ein sicheres Schließen des Endlagenschalters erreicht wird.

## Patentansprüche

1. Chipkartenlesegerät mit einem Rahmen (3) in dem neben sogenannten Lesekontakten (21) ein wenigstens zwei Schaltkontakte (6, 7; 16, 17) aufweisender Endlagenschalter (5, 15) angeordnet ist, der das Erreichen der Leseposition der Chipkarte durch sein Schließen oder Öffnen anzeigt, wobei zur Realisierung eines Öffner-Endschalters (öffners) oder eines Schließer-Endschalters (sokließers) ein beweglicher Schaltkontakt und ein stationärer Schaltkontakt vorgesehen sind, **dadurch gekennzeichnet, daß** beide Schaltkontakte Rastmittel aufweisen und zur Befestigung im Rahmen verrastet sind, daß die beiden Schältkontakte in ihren Ruhezustand vorgespannt sind, und daß ein Schaltteil (41) des beweglichen Schaltkontakts gabelförmig ausgebildet ist und daß er einen Kontaktarm (50) bildet, an dem gabelförmig mit Abstand angeordnet ein abgewinkelter Arm (49) vorgesehen ist, der seinerseits einen Anschlagwinkel zur Bildung eines Kartenanschlags (48) bildet.

2. Chipkartenlesegerät nach Anspruch 1, **dadurch gekennzeichnet, daß** zur Realisierung eines Schließers der bewegliche Schaltkontakt (6) gegen vom Rahmen gebildete Anschlagmittel (10) vorgespannt ist, und daß der stationäre Schaltkontakt (7) gegen vom Rahmen gebildete Anschlagmittel (11) vorgespannt ist.

3. Chipkartenlesegerät nach Anspruch 1; **dadurch gekennzeichnet, daß** zur Bildung eines Öffners der stationäre Schaltkontakt (17) gegen die gleichen Anschlagmittel (20) vorgespannt ist, wie sie zum Vorspannen des beweglichen Schaltkontaktes im Falle der Bildung eines Schließers benutzt werden, und daß der bewegliche Schaltkontakt (16) gegen den stationären Schaltkontakt (17) vorgespannt ist.

4. Chipkartenlesegerät nach einem der Ansprüche 1 bis 3 **dadurch gekennzeichnet, daß** im Bereich der Kontaktstellen der beweglichen und stationären Schaltkontakte Sicken (30, 31) ausgebildet sind, die mit ihren Ausbeulungen aufeinander zuweisen.

5. Chipkartenlesegerät nach Anspruch 4, **dadurch gekennzeichnet, daß** die Ausbeulungen in der Form zweier sich kreuzenden Zylinder ausgebildet sind.

6. Chipkartenlesegerät nach einem der Ansprüche 1-3, **dadurch gekennzeichnet, daß** der stationäre Schaltkontakt (317) an seinem Ende abgewinkelt ist und eine Schrägfläche bildet, und daß der bewegliche Schaltkontakt (316) mit der Schrägfläche (361) zusammenarbeitet.

7. Chipkartenlesegerät nach einem der Ansprüche 1-3 und 6, **dadurch gekennzeichnet, daß** der stationäre Schaltkontakt (317) abgewinkelt ist und der bewegliche Schaltkontakt (316) geradlinig verläuft, und wobei bei der Betätigung des Endlagenschalters eine minimale Relativbewegung zwischen den Schaltkontaktenden (360, 362) auftritt.

8. Chipkartenlesegerät nach einem der Ansprüche 6 oder 7, **dadurch gekennzeichnet, daß** der eine, der stationäre Schaltkontakt (317) gegen einen Anschlag (320) vorgespannt ist, daß der andere, der bewegliche Schaltkontakt (316) gegen die Schrägfläche (361) vorgespannt ist, und daß das Ende (360) des anderen, des beweglidien Schaltkontakts (316) vorzugsweise zweischenklig (363, 364) ausgebildet ist.

9. Chipkartenlesegerät nach einem oder mehreren der Ansprüche 1-3 und 6-8, wobei die Schaltkontakte (416, 417) in der Form einer beweglichen und einer stationären Kontaktfeder ausgebildet sind, wobei die stationäre Kontaktfeder (417) gegen Anschlagmittel (420) vorgespannt ist, die zwischen einem freien Ende (401) und einer Einspannstelle (402) der stationären Kontaktfeder (417) liegen, und wobei die vorgespannte Kontaktfeder (417) eine Schräge (403) bezüglich der beweglichen Kontaktfeder (416) bildet, die durch die Chipkarte betätigbar ist, und zwar vorzugsweise aus einer Schließstellung heraus bewegbar ist.

10. Chipkartenlesegerät nach Anspruch 9, **dadurch gekennzeichnet, daß** die beiden Kontaktfedern (416, 417) im wesentlichen auf einer Linie liegen und sich von einer Kontaktstelle zwischen den zwei Kontaktfedern (416, 417) in entgegengesetzte Richtungen ertrecken.

11. Chipkartenlesegerät nach Anspruch 10, **dadurch gekennzeichnet, daß** zwischen dem freien Ende der beweglichen Kontaktfeder (416) und dem abgeschrägten Ende der stationären Kontaktfeder (417) ein Winkel in der Größenordnung von 45° gebildet wird, wobei der Winkel vorzugsweise zwischen 20° und 70° oder 10° und 90° liegt.

12. Chipkartenlesegerät nach Anspruch 11, **dadurch gekennzeichnet, daß** das Kontaktende (405) der beweglichen Kontaktfeder (416) in der Schließstellung des Endlagenschalters auf der Schräge (403) mit einer Spannung derart aufliegt, daß die vorgespannte stationäre Kontaktfeder (417) in Richtung der Vorspannkraft zusätzlich durch die Kraftwirkung der beweglichen kontaktfeder (416) gespannt ist, so daß beim Öffnen des Endlagenschalters (400) die Schräge (403) der stationären Kontaktfeder (417) zu Beginn der Öffnungsbewegung der beweglichen Kontaktfeder (416) folgt.

## Claims

1. Chip card reader having a frame (3) within which besides the so-called reading contacts (21), an end position switch (5, 15) is arranged,
said end position switch comprising at least two switch contacts (6, 7; 16, 17) and being adapted to provide due to its closing or opening an indication when the chip card has reached its reading position, and wherein for the implementation of an opening end position switch ("opener") or a closing end position switch ("closer") a moveable switch contact and a stationary switch contact are provided
**characterised in that**
both said switch contacts comprise detent or locking means for fixedly lock said contacts in the frame,
both switch contacts are biased into their rest position, and
a switching portion (41) of the moveable switch contact is of fork-like design and forms a contact arm (50) which is provided with a spaced angled arm (49) of fork-like shape, said angled arm, in turn, forms an abutment angle so as to form a card abutment (48).

2. Chip card reader of claim 1, **characterised in that** for realising a closer the moveable switch contact (6) is biased against abutment means (10) formed by the frame, and that the stationary switch contact (7) is biased against abutments means (11) formed by said frame.

3. Chip card reader of claim 1, **characterised in that** for forming an opener the stationary switch contact (17) is biased against abutment means (20) which are the same as those used for biasing the moveable switch contact in the case of forming a closer, and that the moveable switch contact (16) is biased against the stationary switch contact (17).

4. Chip card reader of one of claims 1 to 3, **characterised in that** within the area of the contact zones of the moveable and stationary switch contacts projections (30, 31) are formed which face towards each other with their projections.

5. Chip card reader of claim 4, **characterised in that** the projections have the form of two crossing cylinders.

6. Chip card reader of one of claims 1 to 3, **characterised in that** the stationary switch contact (317) is at its end angled and forms an inclined surface, and that the moveable switch contacts (316) co-operates with said angled surface (361).

7. Chip card reader of one of claims 1 to 3 and 6, **characterised in that** the stationary switch contact (317) is angled and that the moveable switch contact (316) is linear, and wherein, when actuating the end position switch, a minimum relative movement occurs between the switch contact ends (360, 362).

8. Chip card reader of claim 6 or 7, **characterised in that** said one of the switch contacts (317), i.e. the stationary switch contact is biased against a stop or abutment (320) and that the other, the moveable switch contact (316), is biased against said angular surface (362), and that the end (360) of the other, the moveable switch contact (316), is preferably provided with two legs (363, 364).

9. Chip card reader of one or more of claims 1 to 3 and 6 through 8, wherein the switch contacts (416, 417) are provided in the form of a moveable and a stationary contact spring, wherein the stationary contact spring (417) is biased against abutment means (420) which are located between a free and (401) and a mounting location (402) of the stationary contact spring (417), and wherein further the biased contact spring (417) comprises an inclined portion with respect to the moveable contact spring (416), said inclined portion being actuable by means of the chip card preferably out of a closed position.

10. Chip card reader of claim 9, **characterised in that** the two contact springs (416, 417) are located in substance on one line and extend from a contact location between the two contact springs (416, 417) into opposite directions.

11. Chip card reader of claim 10, **characterised in that** between the free end of the moveable contact spring (416) and the inclined end of the stationary contact spring (417) an angle is formed in the area of 45°, wherein said angle is preferably between 20 and 70° or 10 and 90°.

12. Chip card reader of claim 11, **characterised in that** the contact end (45) of the moveable contact spring (416) is in the closing position of the end position switch in engagement with the inclined portion (403) with a tension or a bias such, that the biased stationary contact spring (417) is biased additionally in the direction of the biasing force by means of the force of the moveable contact spring (416) so that the inclined portion (403) of the stationary contact spring will initially follow the opening movement of the moveable contact spring (416) when the end position switch (400) opens.

## Revendications

1. Dispositif de lecture de cartes à puce comportant un cadre (3) dans lequel est disposé, près de ce qu'on appelle des contacts de lecture (21), un interrupteur de fin de course (5, 15), qui comporte au moins deux contacts de commutation (6, 7, 16, 17) et qui indique par sa fermeture ou son ouverture le fait que la position de lecture de la carte à puce est atteinte, dans lequel pour réaliser un interrupteur de fin de course d'ouverture (contact d'ouverture) ou un interrupteur de fin de course de fermeture (contact de fermeture), il est prévu un contact de commutation mobile et un contact de commutation fixe, **caractérisé en ce que** les deux contacts de commutation possèdent des moyens d'encliquetage et sont encliquetés pour la fixation dans le cadre, que les deux contacts de commutation sont précontraints dans leur position de repos et qu'une pièce de commutation (41) du contact de commutation mobile est agencée en forme de fourche et que cette pièce forme un bras de contact (50), sur lequel est prévu un bras coudé (49), qui est agencé en forme de fourche et est disposé à distance et qui forme pour sa part une cornière de butée pour la formation d'une butée (48) de la carte.

2. Dispositif de lecture de cartes à puce selon la revendication 1, **caractérisé en ce que** pour la réalisation d'un contact de fermeture, le contact de commutation mobile (6) est précontraint contre des moyens de butée (10) formés par le cadre et que le contact de commutation fixe (7) est précontraint contre les moyens de butée (11) formés par le cadre.

3. Dispositif de lecture de cartes à puce selon la revendication 1, **caractérisé en ce que** pour la formation d'un contact d'ouverture, le contact de commutation fixe (17) est précontraint contre les mêmes moyens de butée (20) que ceux utilisés pour la précontrainte du contact de commutation mobile dans le cas de la formation d'un contact de fermeture, et que le contact de commutation mobile (16) est précontraint contre le contact de commutation fixe (17).

4. Dispositif de lecture de cartes à puce selon l'une des revendications 1 à 3, **caractérisé en ce que** dans la zone des points de contact du contact de commutation mobile et du contact de commutation fixe sont formées des moulures (30, 31), dont les protubérances sont tournées l'une vers l'autre.

5. Dispositif de lecture de cartes à puce selon la revendication 4, **caractérisé en ce que** les protubérances sont agencées sous la forme de deux cylindres qui se croisent.

6. Dispositif de lecture de cartes à puce selon l'une des revendications 1 à 3, **caractérisé en ce que** le contact de commutation fixe (317) est coudé à son extrémité et forme une surface oblique et que le contact de commutation mobile (316) coopère avec la surface oblique (361).

7. Dispositif de lecture de cartes à puce selon l'une des revendications 1 à 3 et 6, **caractérisé en ce que** le contact de commutation fixe (317) est coudé et que le contact de commutation mobile (316) s'étend avec une forme rectiligne, et dans lequel lors de l'actionnement de l'interrupteur commutateur de fin de course, un déplacement minimum relatif apparaît entre les extrémités (360, 362) des contacts de commutation.

8. Dispositif de lecture de cartes à puce selon l'une des revendications 6 ou 7, **caractérisé en ce qu'**un contact de commutation, le contact de commutation fixe (317), est précontraint contre une butée (320), que l'autre contact de commutation, le contact de commutation mobile (316), est précontraint contre la surface oblique (361) et que l'extrémité (360) de l'autre contact de commutation, le contact de commutation mobile (316), est agencée de préférence de manière à présenter deux branches (363, 364).

9. Dispositif de lecture de cartes à puce selon une ou plusieurs des revendications 1 à 3 et 6 à 8, dans lequel les contacts de commutation (416, 417) sont agencés sous la forme d'un ressort de contact mobile et d'un ressort de contact fixe, dans lequel le ressort de contact fixe (417) étant précontraint contre des moyens de butée (420), qui sont situés entre une extrémité libre (401) et un point de serrage (402) du ressort de contact fixe (417), et dans lequel le ressort de contact précontraint (417) forme un pan oblique (403) par rapport au ressort de contact mobile (416), qui peut être actionné par la carte à puce, et de préférence peut être déplacé à partir d'une position de fermeture.

10. Dispositif de lecture de cartes à puce selon la revendication 9, **caractérisé en ce que** les deux ressorts de contact (416, 417) sont situés essentiellement sur une droite et s'étendent dans des directions opposées à partir d'un point de contact entre les deux ressorts de contact (416, 417).

11. Dispositif de lecture de cartes à puce selon la revendication 10, **caractérisé en ce qu'**un angle de l'ordre de 45° est formé entre l'extrémité libre du ressort de contact mobile (416) et l'extrémité biseautée du ressort de contact fixe (417), l'angle étant compris de préférence entre 20° et 70° ou entre 10° et 90°.

12. Dispositif de lecture de cartes à puce selon la revendication 11, **caractérisé en ce que** lorsque l'interrupteur de fin de course est dans sa position fermée, l'extrémité de contact (405) du ressort de contact mobile (416) s'applique sur le pan oblique (403) avec une contrainte telle que le ressort de contact fixe précontraint (417) est serré en supplément, dans la direction de la force de précontrainte, par l'action de force du ressort de contact mobile (416), de sorte que lors de l'ouverture de l'interrupteur de fin de course (400), le pan oblique (403) du ressort de contact fixe (410) suit au départ le déplacement d'ouverture du ressort de contact mobile (416).
